# EUROPEAN PATENT SPECIFICATION

(11) **EP 4 296 169 B1**
(45) Date of publication and mention of the grant of the patent: **06.08.2025**
(21) Application number: 22180570.8
(22) Date of filing: 22.06.2022
(51) Int. Cl.: B64D 47/08, G02B 6/06, G02B 27/00, B64D 11/00

(54) **SYSTEM AND METHOD FOR DISPLAYING A VIEW OF AN EXTERNAL ENVIRONMENT OF AN AIRCRAFT INSIDE THE AIRCRAFT**
SYSTEM UND VERFAHREN ZUM ANZEIGEN EINER ANSICHT EINER ÄUSSEREN UMGEBUNG EINES FLUGZEUGS INNERHALB DES FLUGZEUGS
SYSTÈME ET PROCÉDÉ D'AFFICHAGE D'UNE VUE D'UN ENVIRONNEMENT EXTÉRIEUR D'UN AÉRONEF À L'INTÉRIEUR DE L'AÉRONEF

(43) Date of publication of application: 27.12.2023
(73) Proprietor: Airbus S.A.S., 31700 Blagnac (FR)
(72) Inventor: COMIN, Alberto, 82024 Taufkirchen (DE)
(74) Representative: OTN Airbus SAS

(56) References cited:
- US-A1- 2017 094 166
- US-A1- 2018 081 615
- US-A1- 2018 284 283

## Description

The present invention pertains to a system and a method for displaying a view of an external environment of an aircraft inside the aircraft.

The design and size of aircraft windows is usually constrained by engineering considerations. Implementing windows in aircraft can increase weight, drag, manufacturing costs and maintenance efforts for the aircraft. Thus, there is a conflict between engineering boundary conditions and the desire for a higher comfort of the passenger.

Prior art documents US 2016/0090196 A1, EP 3 148 186 A1 and EP 3 296 204 A1 describe virtual window systems for aircraft, which capture the external environment of the respective aircraft via cameras installed on the outside of a fuselage and display the recorded images on one or several screens inside the fuselage, thereby replacing conventional window apertures through the fuselage. Prior art document US 2018/0284283 A1 discloses a system and method for aiding rolling and anticollision of a moving airplane on the ground, in which an information item in respect of position and distance of obstacles in an environment of the vehicle is obtained, according to a step of emitting laser pulses, by a distributed laser telemetry coupled to illumination fibered optics by transmission of laser pulses, splitting of the pulses and orientation in multiple directions of these pulses defining an aperture of field of illumination of the environment via an optical interface, and then a step of receiving back the laser pulses emitted by detection of echoes reflected by the obstacles, and a step of processing the echoes received linked with information items in respect of movement of the vehicle which are transmitted by a data platform so as to display information items in respect of obstacles location data.

To accomplish a satisfactory view of the environment based on such an approach one needs a large number of cameras. These cameras should be small, which however may impact their image quality. Cameras can also increase air drag and slightly increase field consumption. Moreover, the cameras will be on the outside, exposed to environmental damage and may thus require frequent maintenance or replacement.

Against this background, it is an object of the present invention to find solutions that combine the comfort and user experience of a normal windowed cabin with the practicality and cost effectiveness of a windowless cabin based on virtual windows.

This object is achieved by a system having the features of claim 1, an aircraft having the features of claim 6 and a method having the features of claim 7.

According to the invention, a system for displaying a view of an external environment of an aircraft inside the aircraft comprises several optical couplers distributed across an outer surface of a fuselage of the aircraft and configured to capture light from the external environment of the aircraft; optical waveguides arranged through the fuselage to transmit the captured light from the optical couplers through the fuselage; at least one display arranged on the inside of the fuselage; and a processing unit configured to receive the captured light from several of the optical waveguides, to reconstruct a digital live image of the external environment by combining optical information contained in the captured light across the respective optical couplers and to display the digital live image on the at least one display; and an optical beam expander configured to receive the captured light from at least one of the optical waveguides, to expand the captured light into a light beam carrying a visual live image of the external environment and to project the visual live image on the at least one display, wherein the at least one display comprises a hybrid display configured to selectively display on a shared screen the digital live image provided by the processing unit and the visual live image provided by the optical beam expander, wherein the shared screen is semi-transparent to transmit the visual live image provided by the optical beam expander, wherein the hybrid display is configured to dynamically adjust the digital live image provided by the processing unit to match the visual live image provided by the optical beam expander, and wherein the at least one display comprises several displays arranged on an inner wall of the fuselage and shaped to represent aircraft windows.

Further according to the invention, an aircraft is equipped with a system according to the invention.

Further according to the invention, a method for displaying a view of an external environment of an aircraft inside the aircraft comprises capturing light from the external environment of the aircraft with several optical couplers distributed across an outer surface of a fuselage of the aircraft; transmitting the captured light from the optical couplers through the fuselage with optical waveguides arranged through the fuselage; and reconstructing a digital live image of the external environment with a processing unit receiving the captured light from several of the optical waveguides by combining optical information contained in the captured light across the respective optical couplers and displaying the digital live image on at least one display arranged inside the fuselage; and expanding the captured light into a light beam carrying a visual live image of the external environment with an optical beam expander receiving the captured light from at least one of the optical waveguides and projecting the visual live image on the at least one display, wherein the at least one display comprises a hybrid display with a shared screen, on which the digital live image provided by the processing unit and the visual live image provided by the optical beam expander are selectively displayed, and wherein the hybrid display dynamically adjusts the digital live image provided by the processing unit to match the visual live image provided by the optical beam expander.

Thus, one idea of the present invention is to realize an almost or quasi-windowless cabin, in which some or all of the windows are replaced by virtual windows connected to the outside via one or more optical couplers and waveguides. The idea is to preserve a more or less direct visual connection between the outside and the inside of the cabin, while at the same time avoiding relevant holes in the fuselage. The invention proposes a solution, which will result in virtual windows with high image quality. It provides almost all the advantages of a windowless cabin, in terms of reduced costs, while giving a better passenger experience than with camera-based windowless cabin solutions. To this end, the invention offers a solution which is based on digital data processing of the optical information contained in the gathered light, as well as based on manipulation and rerouting of the gathered natural light directly to one or several screens inside the aircraft.

In a normal window, the light is carried from the outside to the inside of a cabin via an aperture of significant size in the fuselage. This large opening however can be avoided with the present invention by distributing multiple optical couplers along the fuselage. The image is then carried over by optical fibers (e.g. a fiber cable) or other optical waveguides. The invention takes inspiration from the fields of compressed sensing, computational imaging and/or lensless cameras, where it was shown that relatively good images can be reconstructed by using only a few (<2%) of the pixels available in the camera sensors. Hence, it is possible to use compressed-sensing or similar algorithms to reconstruct what the passengers would see from different points in the cabin. With the right disposition of the optical waveguides, the same scene could be viewed from different angles, and this could potentially enable 3D displays in the passenger seats, or even holograms, once the related technology will become accessible at lower cost.

The invention offers various advantages, amongst them weight reduction. Windows are heavier than the fuselage, thus by replacing them with smaller apertures the aircraft weights less and consumes less fuel. The solution may also allow cheaper integration as smaller windows do not require reinforcement, so they are much easier and cheaper to integrate. Also it will be easier to route cables (e.g. electricity, data cables etc.) from one part of the aircraft to the other. This task may currently be challenging because cable needs to go around large windows. Moreover, displays/screens themselves might be cheaper than the windows, because windows are made of special materials and require special sealings etc.

Together with seamless and high broadband connectivity, enabled by current and future 5G/6G technologies, the proposed technology could also be an ideal entry point to open the passenger experience to the metaverse. Virtual and hybrid 3D screens, augmented realities and (in a further future) holograms, will allow passengers to interact with the metaverse while flying. The passenger could play games or interact with the images to display more information, see how a certain monument would look in winter or in summer or how it was in the past, and then go back to the real current image. The passenger could interact using virtual touch screens, but also with virtual reality headset, e.g. the passengers could bring their own headset and connect it to the cabin to see a 3D view of the surroundings of the aircraft. Future airborne meshed networks will allow different aircraft to share and fuse data, therefore further increasing the quality of the information and the images produced and displayed to the passengers.

Hence, the invention may open up new revenues, e.g. non-intrusive advertisement. 3D virtual screens and hybrid physical/virtual screens open up the possibility of overlapping small advertisements on top of the image. For example, when flying above some mountains, the virtual screen may show the location of ski facilities, hotels etc. in a similar vein to what search engines do for the map services. In addition, airlines could charge more for seats with 3D virtual screens.

Advantageous embodiments and improvements of the present invention are found in the subordinate claims.

According to an embodiment of the invention, the at least one display may comprise a digital display for displaying the digital live image provided by the processing unit and/or a screen for projecting the visual live image provided by the optical beam expander.

Hence, the digital live image may be shown on one or several digital displays inside the aircraft, e.g. within a passenger cabin. The displays may then replace or supplement conventional windows (i.e. apertures through the fuselage wall). Similarly, natural light routed via the optical waveguides may be magnified/expanded and the corresponding visual live image may be projected onto screens facing inward inside the fuselage. These screens may then also take the place of conventional windows. Both approaches may be combined in a single aircraft, e.g. some windows may be replaced by digital displays provided with computed images from the processing unit, while others are replaced by natural light screens being fed by the optical couplers and respective wave guides.

According to the invention, the at least one display comprises a hybrid display configured to selectively display on a shared screen the digital live image provided by the processing unit and the visual live image provided by the optical beam expander.

Some or all virtual windows may thus also be hybrid physical-virtual windows. For this purpose, the light (and images) may be collected using a fiber bundle, for example, and then split with a passive device into two (or more) optical channels. One of them may be routed through the processing unit, and the other may be directly coupled to the hybrid window. The hybrid window can be designed to display both the physical and virtual images or to automatically switch to the physical image from the digital image when the electricity fails, for example. Since the diameter of such a fiber bundle will likely be smaller than the size of the actual window, i.e. the size of the respective display/screen, a beam expander of some sort may be employed. This device could be, for example, entirely fiber based (e.g. with a design inspired by photonic lanterns) and/or do the beam expansion in free space optics (e.g. using micro-lenses).

According to the invention, the shared screen is semi-transparent to transmit the visual live image provided by the optical beam expander.

Hence, in case a hybrid window is designed to display both the physical and virtual images, a semi-transparent screen may be used to display both images on the same screen. The light coming from the optical couplers may first go to a passive beam splitter (e.g. a fiber coupler). Then, part of the light may continue to the processing electronics. The other part may be coupled out from the optical waveguide (e.g. a fiber bundle), magnified to match the screen size (i.e. the virtual window size) and then routed to the hybrid window. If there is an electricity outage, for example, the fail-safe (no-current) mode should be that the natural light is still transmitted through the window. Such a passive channel, which the natural light illuminates, may even be bi-directional. This means that it could be implemented in such a way that an observer from the outside of the aircraft could inspect the inside of the cabin without using any special equipment.

According to the invention, the hybrid display is configured to dynamically adjust the digital live image provided by the processing unit to match the visual live image provided by the optical beam expander.

The digital image can thus be dynamically adjusted to match the natural image, e.g. increase the contrast, resolution and/or brightness of the image, such that a seamless transition between digital and natural images may be performed.

According to the invention, the at least one display comprises several displays arranged on an inner wall of the fuselage and shaped to represent aircraft windows.

The number of small windows/apertures need not to be the same as the current number of windows. It could merely be a fraction of it. A detailed evaluation may be performed for each use case to identify an optimal number of windows. In this sense it should be kept in mind that fewer apertures imply cost savings, which are however accompanied by reduced image quality. The latter could potentially be compensated however, e.g. based on machine learning / Al methods, e.g. denoising and filling in gaps using generative adversarial networks, or advanced computational imaging algorithms. Somewhat similar to 3D imaging solutions used in automotive, a 3D image could be created by merging the different optical feeds. The goal is to recreate a high quality (e.g. spherical) image from as few optical couplers as possible. This can be achieved by having a relatively large overlap between the field of views of the different optical couplers so to have redundancy in the data which can be used to digitally improve the images.

In order to prevent total darkness in case of electricity outage, some of the windows (e.g. on the doors) may not be replaced. Also, several of the windows may be be hybrid physical/virtual windows. In case of an electricity outage they will still show an image (or alternatively just light) using the light coming from the outside of the aircraft via an optical waveguide. Extra costs associated with cleaning/maintaining the aperture windows (optical couplers, fiber bundles etc.) may arise. However, in general it is likely that the system will work also with relatively dirty windows, since the redundancy/overlap between the images seen from the different optical couplers /waveguides will allow to digitally filter out dust and scratches from the individual optical surfaces. Using couplers and waveguides instead of simple cameras is also safer with respect to lighting.

According to an embodiment of the invention, the optical couplers may be configured as fiber collimators and the optical waveguides comprise optical fibers.

For example, single- and/or multi-core fiber couplers may be combined with one or several bundles of fibers as waveguide (such as provided by a fiber cable). It is to be understood of course that also single multi-core fibers and/or multi-mode fibers or similar may be employed for this purpose.

According to an embodiment of the invention, the optical couplers may be arranged recessed in the outer surface of the fuselage.

Thus, small holes or recesses may be provided in the skin of an aircraft, into which the optical couplers may be mounted such that the flow dynamics above the corresponding outer aircraft surfaces is not significantly affected and drag is not increased relevantly.

According to an embodiment of the invention, the processing unit may be configured to employ compressed sensing, sensor fusion and/or computational imaging to reconstruct the digital live image.

Compressed sensing is a signal processing technique for efficiently acquiring and reconstructing a signal by finding solutions to underdetermined linear systems. This is based on the principle that, through optimization, the sparsity of a signal can be exploited to recover it from far fewer samples than required by the Nyquist-Shannon sampling theorem.

Sensor fusion is the process of combining sensor data or data derived from disparate sources such that the resulting information has less uncertainty than would be possible when these sources were used individually. The term uncertainty reduction in this case can mean more accurate, more complete, or more dependable, but may particularly also refer to the result of an emerging view, such as when combining two-dimensional images from several sources at slightly different viewpoints.

Computational imaging is the process of indirectly forming images from measurements using algorithms that rely on a significant amount of computing. In contrast to traditional imaging, computational imaging systems involve a tight integration of the sensing system and the computation in order to form the images of interest.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a cross-sectional view of an aircraft fuselage with a system according to an embodiment of the invention.
Fig. 2 schematically depicts a view of an optical coupler and an optical waveguide as used in the system of Fig. 1.
Fig. 3 is a schematic flow diagram of a method according to an embodiment of the invention.
Fig. 4 schematically depicts another view of the system of Fig. 1.
Figs. 5 and 6 depict non-claimed alternatives for the optical coupler of Fig. 2.
Fig. 7 schematically depicts a system according to another embodiment of the invention.

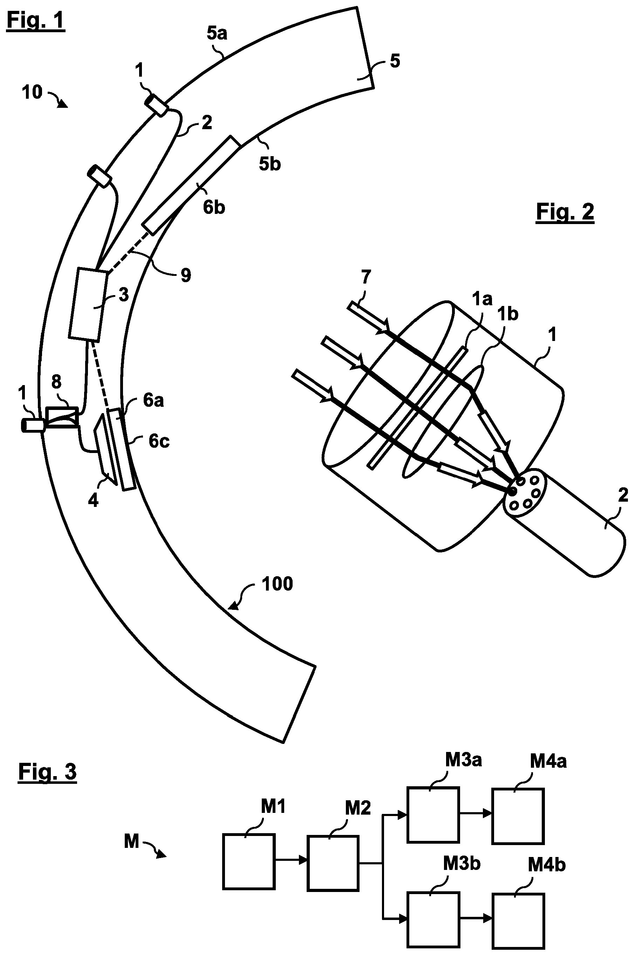

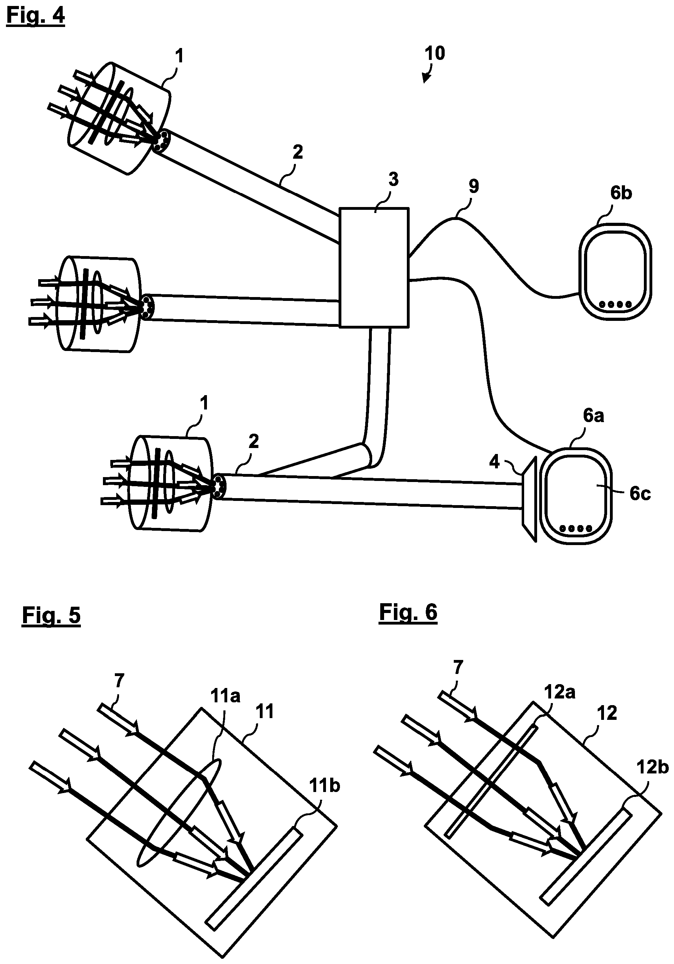

Figure 1 schematically depicts a cross-sectional view of an aircraft fuselage 5 with a system 10 according to an embodiment of the invention. Further views of the system 10 or components of the system 10 are shown in Figs. 2 and 4. Fig. 3 depicts a schematic flow diagram of a corresponding method M.

The aim of the system 10 is to realize a quasi-windowless cabin, in which the windows are replaced by virtual windows (displays 6a, 6b) connected to the outside via optical fibers. The underlying idea is to provide a view of the environment of an aircraft 100 from inside the aircraft 100 without having to weaken the fuselage structure with window apertures. The displays 6a, 6b are arranged on an inner wall 5b of the fuselage 5 and may be shaped to represent conventional aircraft windows (cf. Fig. 4). It is to be understood however that the present solution can also be used with completely different arrangements of virtual windows of different shapes.

The system 10 comprises several fiber collimators as optical couplers 1, which are distributed across an outer surface 5a of a fuselage 5 of the aircraft 100, each optical coupler 1 being mounting in a respective recess (or hole) in the outer surface 5a. The optical couplers 1 are configured to capture light 7 from the external environment of the aircraft 100 and to couple it into respective optical waveguides 2, e.g. fiber bundles or cables, which are routed through the fuselage 5 to transmit the captured light 7 from the optical couplers 1 through the fuselage 5. One such optical coupler 1 is depicted in detail in Fig. 2.

As can be seen here, light 7 from the environment enters the optical coupler 1 via a phase and/or amplitude mask 1a (similarly to what is done in lensless cameras) and is then focused into the waveguide 2 by beans of a lens 1b. The waveguide 2 (fiber cable) may carry multiple optical signals, which allows it to reconstruct an image, similarly to what is done in lensless imaging. For this purpose the waveguide 2 can be implemented in several possible ways, for example as a bundle of fibers, as a single multi-core fiber or as a multimode fiber. Here, the individual cores of the fibers play a similar role as the pixels of the sensor in a lensless camera.

Some of the waveguides 2 are coupled to a processing unit 3, which is configured to receive the captured light 7 from the optical waveguides 2, to reconstruct a digital live image of the external environment by combining optical information contained in the captured light 7 across the respective optical couplers 1 and to display the digital live image on one or several digital displays 6b. To this end, the processing unit 3 may employ compressed sensing, sensor fusion and/or computational imaging or similar methods to reconstruct the digital live image from one or several optical couplers 1.

The number of fibers required to form an image could be significantly less that the number of pixels required for a normal cameras. This the case, because the high number of pixels usually provided by modern cameras (often > 10 megapixel) is not required for the present purpose (no images need to be printed). Moreover, and more importantly, computational imaging and other advanced methods allow to retrieve an image from very few pixels, that is fibers in the present case. Sensor fusion between the data produced by the different cameras / fiber bundles will likely allow to reduce the number of fiber-per-bundle even further, by exploiting redundancies (overlap between images) and/or by using deep learning (e.g. generative adversarial networks).

An alternative but not claimed approach, perhaps more conventional, is to use several very small cameras and then combine their outputs via sensor fusion techniques in order to combine all the electrical outputs of the mini-cameras into a single big image. Two possible implementations, one more conventional and one relaying on lensless imaging are presented in Figs. 5 and 6.

Fig. 5 shows an alternative implementation similar to the proposed solution in which the fiber collimators are replaced by conventional mini-cameras 11. Fig. 6 shows a corresponding embodiment with a smaller lensless camera 12. In the first case, the light rays are focused by a camera lens 11a into a pixelated sensor 11b. In the second case, the lens 11a is replaced by a phase/amplitude mask 12a. A key difference between this approach and the approach based on fiber couplers is that in this second approach there would be an electrical instead of an optical connection between the camera and the processing unit 3. It is to be understood of course that these connections as well as the electrical connections between the processing unit 3 and the displays 6a, 6b could in principle be replaced by wireless connections, thanks to the recent improvement in remote powering.

Coming back to the embodiment of Figs. 1 and 4, some of the optical waveguides 2 are also fed to optical beam expanders 4 in order to directly project the natural light from the environment into the aircraft 100. To this end, each optical beam expander 4 is configured to receive the captured light 7 from at least one of the optical waveguides 2, to expand/magnify the captured light 7 into a light beam carrying a visual live image of the external environment and to project the visual live image on a screen 6c inside the fuselage 5.

The screen 6c may be part of a corresponding (analog) display, for example. In the exemplary embodiment of Fig. 1, the screen 6c is however part of a hybrid display 6a and used as a shared screen to selectively display the digital live image and the visual light image. To this end, the hybrid display 6a may be provided with a semi-transparent screen 6c to transmit the visual live image provided by the optical beam expander 4.

As can be seen in Figs. 1 and 4, the waveguide 2 stemming from the optical coupler 1 feeding the hybrid display 6a with the visual live image is split up by means of a beam splitter and/or fiber coupler 8. The other output line is also routed to the processing unit 3, which provides a corresponding digital live image of the respective optical coupler 1. The hybrid display 6a is adapted to dynamically adjust the digital live image provided by the processing unit 3 to match the visual live image provided by the optical beam expander 4. In this vein, the hybrid display 6a is able to selectively switch between natural light (visual live image) and digitized images (digital live images). For example, the digital live images may be displayed by default. Only under certain circumstances, e.g. during a power outage, the system 10 may switch to the visual live images to make sure that at least some of the windows of the aircraft 100 still provide light to the inside.

The method M in Fig. 3 correspondingly comprises under M1 capturing light 7 from the external environment with several optical couplers 1 and under M2 transmitting the captured light 7 from the optical couplers 1 through the fuselage 5 with optical waveguides 2. Moreover, the method M comprises as a first option under M3a reconstructing a digital live image of the external environment with the processing unit 3 by combining optical information contained in the captured light 7 across the respective optical couplers 1 and under M4a displaying the digital live image on the digital display 6b. As a second option, the method M comprises under M3b expanding the captured light 7 into a light beam carrying a visual live image of the external environment with an optical beam expander 4 receiving the captured light 7 from at least one of the optical waveguides 2 and under M4b projecting the visual live image on the hybrid display 6a.

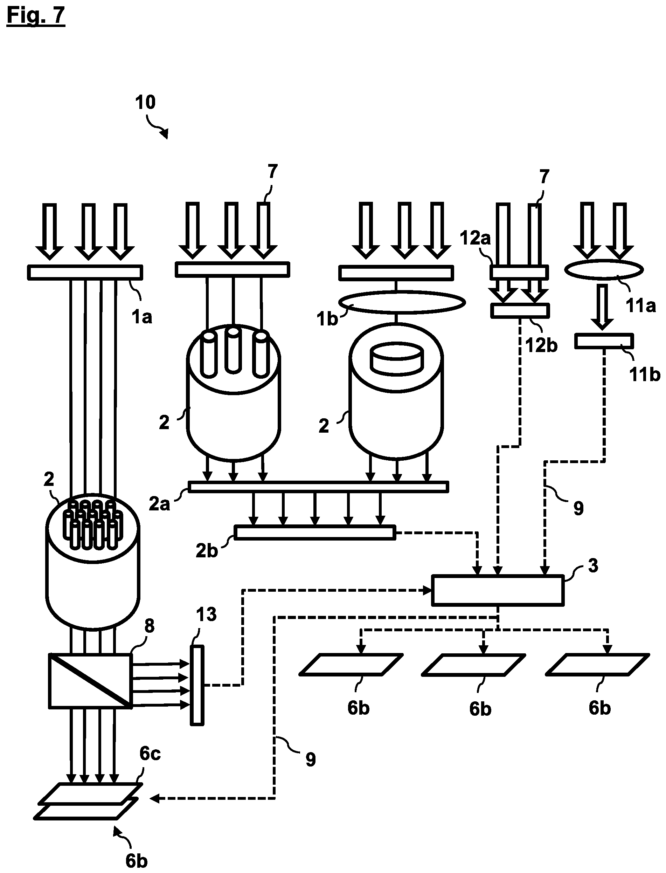

Fig. 7 shows a detailed view of another embodiment of the invention. A hybrid display 6b is employed alongside several digital displays 6b. In this case however, the digital displays 6b are additionally fed by mini-cameras 11 and lensless cameras 12. Moreover, different types of optical waveguides 2 are employed to illustrate that not only fiber bundles (left side in Fig. 7) but also multi-core fibers etc. may be utilized for the present purpose.

In the foregoing detailed description, various features are grouped together in one or more examples or examples with the purpose of streamlining the disclosure. It is to be understood that the above description is intended to be illustrative, and not restrictive. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use are contemplated, as long as they fall within the scope of the appended claims.

### List of reference signs

- 1: optical coupler
- 1a: phase/amplitude mask
- 1b: lens
- 2: optical waveguide
- 2a: phase/amplitude mask
- 2b: pixelated sensor
- 3: processing unit
- 4: optical beam expander
- 5: fuselage
- 5a: outer surface of fuselage
- 5b: inner wall
- 6a: hybrid display
- 6b: digital display
- 6c: screen
- 7: light
- 8: beam splitter / fiber coupler
- 9: electric line
- 10: system
- 11: mini-camera
- 11a: camera lens
- 11b: pixelated sensor
- 12: lensless camera
- 12a: phase/amplitude mask
- 12b: pixelated sensor
- 13: pixelated sensor
- 100: aircraft
- M: method
- M1-M4b: method steps

## Claims

1. System (10) for displaying a view of an external environment of an aircraft (100) inside the aircraft (100), comprising:
several optical couplers (1) distributed across an outer surface (5a) of a fuselage (5) of the aircraft (100) and configured to capture light (7) from the external environment of the aircraft (100);
optical waveguides (2) arranged through the fuselage (5) to transmit the captured light (7) from the optical couplers (1) through the fuselage (5);
at least one display (6a, 6b) arranged on the inside of the fuselage (5); and
a processing unit (3) configured to receive the captured light (7) from several of the optical waveguides (2), to reconstruct a digital live image of the external environment by combining optical information contained in the captured light (7) across the respective optical couplers (1) and to display the digital live image on the at least one display (6a, 6b); and
**characterized in that** the system further comprises
an optical beam expander (4) configured to receive the captured light (7) from at least one of the optical waveguides (2), to expand the captured light (7) into a light beam carrying a visual live image of the external environment and to project the visual live image on the at least one display (6a, 6b), wherein the at least one display (6a, 6b) comprises a hybrid display (6a) configured to selectively display on a shared screen (6c) the digital live image provided by the processing unit (3) and the visual live image provided by the optical beam expander (4), wherein the shared screen (6c) is semi-transparent to transmit the visual live image provided by the optical beam expander (4), wherein the hybrid display (6a) is configured to dynamically adjust the digital live image provided by the processing unit (3) to match the visual live image provided by the optical beam expander (4), and wherein the at least one display (6a, 6b) comprises several displays (6a, 6b) arranged on an inner wall (5b) of the fuselage (5) and shaped to represent aircraft windows.

2. System (10) according to claim 1, wherein the at least one display (6a, 6b) comprises a digital display (6b) for displaying the digital live image provided by the processing unit (3) and/or a screen (6c) for projecting the visual live image provided by the optical beam expander (4).

3. System (10) according to one of the claims 1 or 2, wherein the optical couplers (1) are configured as fiber collimators and the optical waveguides (2) comprise optical fibers.

4. System (10) according to one of the claims 1 to 3, wherein the optical couplers (1) are arranged recessed in the outer surface of the fuselage (5).

5. System (10) according to one of the claims 1 to 4, wherein the processing unit (3) is configured to employ at least one of compressed sensing, sensor fusion and computational imaging to reconstruct the digital live image.

6. Aircraft (100) equipped with a system (10) according to one of the claims 1 to 5.

7. Method (M) for displaying a view of an external environment of an aircraft (100) inside the aircraft (100), comprising:
capturing (M1) light (7) from the external environment of the aircraft (100) with several optical couplers (1) distributed across an outer surface (5a) of a fuselage (5) of the aircraft (100);
transmitting (M2) the captured light (7) from the optical couplers (1) through the fuselage (5) with optical waveguides (2) arranged through the fuselage (5); and
reconstructing (M3a) a digital live image of the external environment with a processing unit (3) receiving the captured light (7) from several of the optical waveguides (2) by combining optical information contained in the captured light (7) across the respective optical couplers (1) and displaying (M4a) the digital live image on at least one display (6a, 6b) arranged inside the fuselage (5); expanding (M3b) the captured light (7) into a light beam carrying a visual live image of the external environment with an optical beam expander (4) receiving the captured light (7) from at least one of the optical waveguides (2) and projecting (M4b) the visual live image on the at least one display (6a, 6b), wherein the at least one display (6a, 6b) comprises a hybrid display (6a) with a shared screen (6c), on which the digital live image provided by the processing unit (3) and the visual live image provided by the optical beam expander (4) are selectively displayed, and wherein the hybrid display (6a) dynamically adjusts the digital live image provided by the processing unit (3) to match the visual live image provided by the optical beam expander (4).

8. Method (M) according to claim 7, wherein the processing unit (3) employs at least one of compressed sensing, sensor fusion and computational imaging to reconstruct the digital live image.

## Patentansprüche

1. System (10) zum Anzeigen einer Ansicht einer externen Umgebung eines Flugzeugs (100) innerhalb des Flugzeugs (100), umfassend: mehrere optische Koppler (1), die über eine Außenfläche (5a) eines Rumpfes (5) des Flugzeugs (100) verteilt und dazu konfiguriert sind, Licht (7) aus der externen Umgebung des Flugzeugs (100) einzufangen; optische Wellenleiter (2), die durch den Rumpf (5) angeordnet sind, um das eingefangene Licht (7) von den optischen Kopplern (1) durch den Rumpf (5) zu übertragen; mindestens eine Anzeige (6a, 6b), die auf der Innenseite des Rumpfes (5) angeordnet ist; und eine Verarbeitungseinheit (3), die dazu konfiguriert ist, das eingefangene Licht (7) von mehreren der optischen Wellenleiter (2) zu empfangen, ein digitales Live-Bild der externen Umgebung durch Kombinieren optischer Informationen, die in dem eingefangenen Licht (7) enthalten sind, über die jeweiligen optischen Koppler (1) zu rekonstruieren und das digitale Live-Bild auf der mindestens einen Anzeige (6a, 6b) anzuzeigen; und **dadurch gekennzeichnet, dass** das System ferner umfasst: einen optischen Strahlaufweiter (4), der dazu konfiguriert ist, das eingefangene Licht (7) von mindestens einem der optischen Wellenleiter (2) zu empfangen, das eingefangene Licht (7) in einen Lichtstrahl zu erweitern, der ein visuelles Live-Bild der externen Umgebung trägt, und das visuelle Live-Bild auf der mindestens einen Anzeige (6a, 6b) zu projizieren, wobei die mindestens eine Anzeige (6a, 6b) eine Hybridanzeige (6a) umfasst, die dazu konfiguriert ist, selektiv auf einem gemeinsamen Bildschirm (6c) das von der Verarbeitungseinheit (3) bereitgestellte digitale Live-Bild und das von dem optischen Strahlaufweiter (4) bereitgestellte visuelle Live-Bild anzuzeigen, wobei der gemeinsame Bildschirm (6c) semi-transparent ist, um das von dem optischen Strahlaufweiter (4) bereitgestellte visuelle Live-Bild zu übertragen, wobei die Hybridanzeige (6a) dazu konfiguriert ist, das von der Verarbeitungseinheit (3) bereitgestellte digitale Live-Bild dynamisch anzupassen, um dem von dem optischen Strahlaufweiter (4) bereitgestellten visuellen Live-Bild zu entsprechen, und wobei die mindestens eine Anzeige (6a, 6b) mehrere Anzeigen (6a, 6b) umfasst, die an einer Innenwand (5b) des Rumpfes (5) angeordnet und so geformt sind, dass sie Flugzeugfenster darstellen.

2. System (10) nach Anspruch 1, wobei die mindestens eine Anzeige (6a, 6b) eine digitale Anzeige (6b) zum Anzeigen des von der Verarbeitungseinheit (3) bereitgestellten digitalen Live-Bildes und/oder einen Bildschirm (6c) zum Projizieren des von dem optischen Strahlaufweiter (4) bereitgestellten visuellen Live-Bildes umfasst.

3. System (10) nach einem der Ansprüche 1 oder 2, wobei die optischen Koppler (1) als Faser-Kollimatoren konfiguriert sind und die optischen Wellenleiter (2) optische Fasern umfassen.

4. System (10) nach einem der Ansprüche 1 bis 3, wobei die optischen Koppler (1) vertieft in der Außenfläche des Rumpfes (5) angeordnet sind.

5. System (10) nach einem der Ansprüche 1 bis 4, wobei die Verarbeitungseinheit (3) dazu konfiguriert ist, mindestens eines von komprimierter Abtastung, Sensorfusion und rechnergestützter Bildgebung einzusetzen, um das digitale Live-Bild zu rekonstruieren.

6. Flugzeug (100), ausgestattet mit einem System (10) nach einem der Ansprüche 1 bis 5.

7. Verfahren (M) zum Anzeigen einer Ansicht einer externen Umgebung eines Flugzeugs (100) innerhalb des Flugzeugs (100), umfassend: Einfangen (M1) von Licht (7) aus der externen Umgebung des Flugzeugs (100) mit mehreren optischen Kopplern (1), die über eine Außenfläche (5a) eines Rumpfes (5) des Flugzeugs (100) verteilt sind; Übertragen (M2) des eingefangenen Lichts (7) von den optischen Kopplern (1) durch den Rumpf (5) mit optischen Wellenleitern (2), die durch den Rumpf (5) angeordnet sind; und Rekonstruieren (M3a) eines digitalen Live-Bildes der externen Umgebung mit einer Verarbeitungseinheit (3), die das eingefangene Licht (7) von mehreren der optischen Wellenleiter (2) empfängt, durch Kombinieren optischer Informationen, die in dem eingefangenen Licht (7) enthalten sind, über die jeweiligen optischen Koppler (1) und Anzeigen (M4a) des digitalen Live-Bildes auf mindestens einer Anzeige (6a, 6b), die innerhalb des Rumpfes (5) angeordnet ist; Erweitern (M3b) des eingefangenen Lichts (7) in einen Lichtstrahl, der ein visuelles Live-Bild der externen Umgebung trägt, mit einem optischen Strahlaufweiter (4), der das eingefangene Licht (7) von mindestens einem der optischen Wellenleiter (2) empfängt, und Projizieren (M4b) des visuellen Live-Bildes auf der mindestens einen Anzeige (6a, 6b), wobei die mindestens eine Anzeige (6a, 6b) eine Hybridanzeige (6a) mit einem gemeinsamen Bildschirm (6c) umfasst, auf dem das von der Verarbeitungseinheit (3) bereitgestellte digitale Live-Bild und das von dem optischen Strahlaufweiter (4) bereitgestellte visuelle Live-Bild selektiv angezeigt werden, und wobei die Hybridanzeige (6a) das von der Verarbeitungseinheit (3) bereitgestellte digitale Live-Bild dynamisch anpasst, um dem von dem optischen Strahlaufweiter (4) bereitgestellten visuellen Live-Bild zu entsprechen.

8. Verfahren (M) nach Anspruch 7, wobei die Verarbeitungseinheit (3) mindestens eines von komprimierter Abtastung, Sensorfusion und rechnergestützter Bildgebung einsetzt, um das digitale Live-Bild zu rekonstruieren.

## Revendications

1. Système (10) d'affichage d'une vue d'un environnement externe d'un aéronef (100) à l'intérieur de l'aéronef (100), comprenant : plusieurs coupleurs optiques (1) répartis sur une surface externe (5a) d'un fuselage (5) de l'aéronef (100) et configurés pour capturer la lumière (7) de l'environnement externe de l'aéronef (100) ; des guides d'ondes optiques (2) agencés à travers le fuselage (5) pour transmettre la lumière capturée (7) des coupleurs optiques (1) à travers le fuselage (5) ; au moins un affichage (6a, 6b) agencé à l'intérieur du fuselage (5) ; et une unité de traitement (3) configurée pour recevoir la lumière capturée (7) de plusieurs des guides d'ondes optiques (2), pour reconstruire une image numérique en direct de l'environnement externe en combinant les informations optiques contenues dans la lumière capturée (7) à travers les coupleurs optiques respectifs (1) et pour afficher l'image numérique en direct sur l'au moins un affichage (6a, 6b) ; et **caractérisé en ce que** le système comprend en outre : un expanseur de faisceau optique (4) configuré pour recevoir la lumière capturée (7) d'au moins un des guides d'ondes optiques (2), pour étendre la lumière capturée (7) en un faisceau lumineux portant une image visuelle en direct de l'environnement externe et pour projeter l'image visuelle en direct sur l'au moins un affichage (6a, 6b), dans lequel l'au moins un affichage (6a, 6b) comprend un affichage hybride (6a) configuré pour afficher sélectivement sur un écran partagé (6c) l'image numérique en direct fournie par l'unité de traitement (3) et l'image visuelle en direct fournie par l'expanseur de faisceau optique (4), dans lequel l'écran partagé (6c) est semi-transparent pour transmettre l'image visuelle en direct fournie par l'expanseur de faisceau optique (4), dans lequel l'affichage hybride (6a) est configuré pour ajuster dynamiquement l'image numérique en direct fournie par l'unité de traitement (3) pour correspondre à l'image visuelle en direct fournie par l'expanseur de faisceau optique (4), et dans lequel l'au moins un affichage (6a, 6b) comprend plusieurs affichages (6a, 6b) agencés sur une paroi intérieure (5b) du fuselage (5) et formés pour représenter des fenêtres d'aéronef.

2. Système (10) selon la revendication 1, dans lequel l'au moins un affichage (6a, 6b) comprend un affichage numérique (6b) pour afficher l'image numérique en direct fournie par l'unité de traitement (3) et/ou un écran (6c) pour projeter l'image visuelle en direct fournie par l'expanseur de faisceau optique (4).

3. Système (10) selon l'une des revendications 1 ou 2, dans lequel les coupleurs optiques (1) sont configurés comme des collimateurs de fibres et les guides d'ondes optiques (2) comprennent des fibres optiques.

4. Système (10) selon l'une des revendications 1 à 3, dans lequel les coupleurs optiques (1) sont agencés en retrait dans la surface externe du fuselage (5).

5. Système (10) selon l'une des revendications 1 à 4, dans lequel l'unité de traitement (3) est configurée pour employer au moins une technique parmi la détection compressée, la fusion de capteurs et l'imagerie computationnelle pour reconstruire l'image numérique en direct.

6. Aéronef (100) équipé d'un système (10) selon l'une des revendications 1 à 5.

7. Procédé (M) d'affichage d'une vue d'un environnement externe d'un aéronef (100) à l'intérieur de l'aéronef (100), comprenant : la capture (M1) de lumière (7) de l'environnement externe de l'aéronef (100) avec plusieurs coupleurs optiques (1) répartis sur une surface externe (5a) d'un fuselage (5) de l'aéronef (100) ; la transmission (M2) de la lumière capturée (7) des coupleurs optiques (1) à travers le fuselage (5) avec des guides d'ondes optiques (2) agencés à travers le fuselage (5) ; et la reconstruction (M3a) d'une image numérique en direct de l'environnement externe avec une unité de traitement (3) recevant la lumière capturée (7) de plusieurs des guides d'ondes optiques (2) en combinant les informations optiques contenues dans la lumière capturée (7) à travers les coupleurs optiques respectifs (1) et l'affichage (M4a) de l'image numérique en direct sur au moins un affichage (6a, 6b) agencé à l'intérieur du fuselage (5) ; l'extension (M3b) de la lumière capturée (7) en un faisceau lumineux portant une image visuelle en direct de l'environnement externe avec un expanseur de faisceau optique (4) recevant la lumière capturée (7) d'au moins un des guides d'ondes optiques (2) et la projection (M4b) de l'image visuelle en direct sur l'au moins un affichage (6a, 6b), dans lequel l'au moins un affichage (6a, 6b) comprend un affichage hybride (6a) avec un écran partagé (6c), sur lequel l'image numérique en direct fournie par l'unité de traitement (3) et l'image visuelle en direct fournie par l'expanseur de faisceau optique (4) sont affichées sélectivement, et dans lequel l'affichage hybride (6a) ajuste dynamiquement l'image numérique en direct fournie par l'unité de traitement (3) pour correspondre à l'image visuelle en direct fournie par l'expanseur de faisceau optique (4).

8. Procédé (M) selon la revendication 7, dans lequel l'unité de traitement (3) emploie au moins une technique parmi la détection compressée, la fusion de capteurs et l'imagerie computationnelle pour reconstruire l'image numérique en direct.
